# EUROPEAN PATENT SPECIFICATION

(11) **EP 3 366 563 B1**
(45) Date of publication and mention of the grant of the patent: **03.04.2019**
(21) Application number: 18157189.4
(22) Date of filing: 16.02.2018
(51) Int. Cl.: B62L 1/00, B62K 11/00, B62K 21/00, B62K 11/14, B62K 21/12

(54) **MOTORCYCLE**
MOTORRAD
MOTOCYCLETTE

(30) Priority: 28.02.2017 JP 2017037081
(43) Date of publication of application: 29.08.2018
(73) Proprietor: Yamaha Hatsudoki Kabushiki Kaisha, Iwata-shi Shizuoka 438-8501 (JP)
(72) Inventor: TAKESAKO, Wahei, Iwata-shi, Shizuoka 438-8501 (JP); MIZUNO, Ryota, Iwata-shi, Shizuoka 438-8501 (JP)
(74) Representative: Grünecker Patent- und Rechtsanwälte PartG mbB

(56) References cited:
- EP-A2- 0 086 603
- FR-A- 985 372
- JP-A- H04 271 984
- JP-A- S60 226 380
- JP-A- S62 286 881
- JP-U- H04 132 892
- US-A1- 2007 151 404

## Description

The present invention relates to a motorcycle.

A method described in Japanese Utility Model No. 2537734, for example, is known in the art as a method for adjusting the position of the center of gravity of the motorcycle in the vehicle width direction. Japanese Utility Model No. 2537734 discloses a motorcycle whose center of gravity is brought closer to the vehicle center line by devising the placement of relatively heavy vehicle components. In the motorcycle disclosed in Japanese Utility Model No. 2537734, the transmission case is located leftward of the vehicle center line and the muffler is located rightward of the vehicle center line. The left-right balance of the vehicle as a whole is ensured by arranging the battery case rightward of the vehicle center line. Japanese Utility Model No. 2537734 is considered the closest prior art document, and discloses all of the features of the preambles of claims 1 and 7.

By ensuring the left-right balance, it is possible to improve the straight-traveling stability of the motorcycle. However, in order to move the center of gravity closer to the vehicle center line, a heavy object as heavy as the transmission case (which is a heavy object) needs to be placed on the opposite side from the transmission case with respect to the vehicle center line. Thus, the method described above is based on the idea of adding a heavy object to whichever is lighter between the left side and the right side of the vehicle in order to solve the left-right imbalance of the vehicle. This method is a method of adding a heavy object to the body frame. Therefore, the weight of the motorcycle possibly increases.

It has been first studied the mechanism by which the steering shaft of a motorcycle rotates. It is a nature of a motorcycle that the steering shaft rotates leftward when the body frame tilts leftward and the steering shaft rotates rightward when the body frame tilts rightward. However, when the body frame tilts leftward, the steering shaft does not immediately rotate leftward. When the body frame tilts leftward, the steering shaft instantaneously rotates rightward and rotates leftward thereafter. It has been took notice of the phenomenon that the steering shaft instantaneously rotates rightward before rotating leftward.

In a motorcycle, the front wheel brake may be placed lopsided toward the right side of the front wheel. In such a case, a portion of the steering system including the steering shaft, the front wheel and the brake that is located rightward of the center line of the front wheel is heavier than a portion thereof that is located leftward of the center line of the front wheel. Therefore, the steering shaft is likely to rotate rightward. If the steering shaft is likely to rotate rightward, a leftward tilt of the body frame is likely to induce the behavior of the steering shaft instantaneously rotating rightward and rotating leftward thereafter.

When the center of gravity of the vehicle is located leftward with respect to the vehicle center line, the body frame is more likely to tilt leftward. Therefore, the steering shaft is likely to instantaneously rotate rightward and rotate leftward immediately thereafter.

In view of this, it has been thought that if it were possible to suppress the behavior of the steering shaft instantaneously rotating rightward, it would be possible to avoid the behavior of the steering shaft rotating leftward thereafter. Thus, it has been reached a conclusion that the behavior of the steering shaft instantaneously rotating rightward can be suppressed by correcting the left-right weight balance of the steering system. Then, the rotation of the steering shaft which happens when the body frame tilts can be suppressed without correcting the left-right weight balance of the vehicle as a whole. As a result, it is possible to improve the straight-traveling stability of the motorcycle without suppressing an increase in the weight of the vehicle.

It is an object of the present invention to provide a motorcycle which can improve the straight-traveling stability while suppressing a weight increase whose center of gravity is shifted leftward off the vehicle center line and whose brake is located rightward of the front wheel or whose center of gravity is shifted rightward off the vehicle center line and whose brake is located leftward of the front wheel. According to the present invention said object is solved by a motorcycle having the features of independent claim 1 or independent claim 7. Preferred embodiments are laid down in the dependent claims.

A motorcycle according to the present teaching includes: a body frame including a head pipe; a steering shaft rotatably inserted into the head pipe; a front wheel supported on the steering shaft; a handle supported on the steering shaft and located above the front wheel; and a brake configured to brake the front wheel. The handle includes a handle bar secured on the steering shaft, a left grip provided on a left end portion of the handle bar, and a right grip provided on a right end portion of the handle bar. A center of gravity of a vehicle is located leftward of a vehicle center line, which is a line that includes a center line of the head pipe and extends in a vehicle front-rear direction, as the vehicle is seen from above. The brake is located rightward of the front wheel. A distance in the vehicle width direction between a right end of the left grip and the vehicle center line is greater than a distance in the vehicle width direction between a left end of the brake and the vehicle center line. A weight of a portion of the handle that is located leftward of the right end of the left grip is greater than a weight of a portion of the handle that is located rightward of a left end of the right grip.

According to the motorcycle, the weight of a portion (hereinafter referred to as the handle left end portion) of the handle that is located leftward of the right end of the left grip is greater than the weight of a portion (hereinafter referred to as the handle right end portion) of the handle that is located rightward of the left end of the right grip. Herein, the distance in the vehicle width direction between the right end of the left grip and the vehicle center line is greater than the distance in the vehicle width direction between the left end of the brake and the vehicle center line. Therefore, even if the weight difference between the handle left end portion and the handle right end portion is relatively small, the weight difference gives a relatively large rotation moment on the steering shaft. Therefore, it is possible to correct the left-right weight balance of the steering system while suppressing an increase in the weight of the handle. Then, it is possible to suppress the steering shaft being likely to rotate rightward even though the brake is located rightward of the front wheel. When the body frame tilts leftward, it is possible to suppress the steering shaft instantaneously rotating rightward and it is possible to suppress the steering shaft rotating leftward thereafter. Therefore, in a motorcycle of which the center of gravity of the vehicle is located leftward of the vehicle center line and the brake is located rightward of the front wheel, it is possible to improve the straight-traveling stability while suppressing a weight increase.

According to one preferred aspect, the handle includes a left grip end at least a portion of which is located leftward of the left grip and leftward of the handle bar, and a right grip end at least a portion of which is located rightward of the right grip and rightward of the handle bar. A weight of the left grip end is greater than a weight of the right grip end.

The left grip end and the right grip end are members of the handle that are farthest away from the steering shaft. Even if there is a small weight difference between the left grip end and the right grip end, the rotation moment to be applied on the steering shaft by the weight difference will be large. According to the aspect above, although the weight of the left grip end is greater than the weight of the right grip end, it is possible to keep the weight of the left grip end relatively low while suppressing the rightward rotation of the steering shaft when the body frame tilts leftward.

According to another preferred aspect, the left grip end is made of a metal, and the right grip end is made of a resin.

According to the aspect above, the weight of the left grip end can be made greater than the weight of the right grip end with a simple configuration.

According to another preferred aspect, the weight of the portion of the handle that is located leftward of the right end of the left grip is greater than or equal to twice the weight of the portion of the handle that is located rightward of the left end of the right grip.

According to the aspect above, it is possible to provide a desirable motorcycle with which it is possible to suppress the rightward rotation of the steering shaft when the body frame tilts leftward.

According to another preferred aspect, the brake includes a brake disc and a brake caliper.

According to the aspect above, the advantageous effects described above can be realized with a motorcycle in which the brake disc and the brake caliper are located rightward of the front wheel.

According to another preferred aspect, a left-right center of the front wheel is located leftward of the vehicle center line.

According to the aspect above, it is possible to further suppress the rightward rotation of the steering shaft when the body frame tilts leftward. Therefore, it is possible to further improve the straight-traveling stability of the motorcycle.

Another motorcycle according to the present teaching includes: a body frame including a head pipe; a steering shaft rotatably inserted into the head pipe; a front wheel supported on the steering shaft; a handle supported on the steering shaft and located above the front wheel; and a brake configured to brake the front wheel. The handle includes a handle bar secured on the steering shaft, a left grip provided on a left end portion of the handle bar, and a right grip provided on a right end portion of the handle bar. A center of gravity of a vehicle is located rightward of a vehicle center line, which is a line that includes a center line of the head pipe and extends in a vehicle front-rear direction, as the vehicle is seen from above. The brake is located leftward of the front wheel. A distance in a vehicle width direction between a left end of the right grip and the vehicle center line is greater than a distance in the vehicle width direction between a right end of the brake and the vehicle center line. A weight of a portion of the handle that is located rightward of the left end of the right grip is greater than a weight of a portion of the handle that is located leftward of a right end of the left grip.

According to the motorcycle, the weight of a portion (hereinafter referred to as the handle right end portion) of the handle that is located rightward of the left end of the right grip is greater than the weight of a portion (hereinafter referred to as the handle left end portion) of the handle that is located leftward of the right end of the left grip. Herein, the distance in the vehicle width direction between the left end of the right grip and the vehicle center line is greater than the distance in the vehicle width direction between the right end of the brake and the vehicle center line. Therefore, even if the weight difference between the handle right end portion and the handle left end portion is relatively small, the weight difference gives a relatively large rotation moment on the steering shaft. Therefore, it is possible to correct the left-right weight balance of the steering system while suppressing an increase in the weight of the handle. Then, it is possible to suppress the steering shaft being likely to rotate leftward even though the brake is located leftward of the front wheel. When the body frame tilts rightward, it is possible to suppress the steering shaft instantaneously rotating leftward and it is possible to suppress the steering shaft rotating rightward thereafter. Therefore, in a motorcycle of which the center of gravity of the vehicle is located rightward of the vehicle center line and the brake is located leftward of the front wheel, it is possible to improve the straight-traveling stability while suppressing a weight increase.

According to one preferred aspect, the handle includes a left grip end at least a portion of which is located leftward of the left grip and leftward of the handle bar, and a right grip end at least a portion of which is located rightward of the right grip and rightward of the handle bar. A weight of the right grip end is greater than a weight of the left grip end.

According to the aspect above, although the weight of the right grip end is greater than the weight of the left grip end, it is possible to keep the weight of the right grip end relatively low while suppressing the leftward rotation of the steering shaft when the body frame tilts rightward.

According to another preferred aspect, the right grip end is made of a metal, and the left grip end is made of a resin.

According to the aspect above, the weight of the right grip end can be made greater than the weight of the left grip end with a simple configuration.

According to another preferred aspect, the weight of the portion of the handle that is located rightward of the left end of the right grip is greater than or equal to twice the weight of the portion of the handle that is located leftward of the right end of the left grip.

According to the aspect above, it is possible to provide a desirable motorcycle with which it is possible to suppress the leftward rotation of the steering shaft when the body frame tilts rightward.

According to another preferred aspect, the brake includes a brake disc and a brake caliper.

According to the aspect above, the advantageous effects described above can be realized with a motorcycle in which the brake disc and the brake caliper are located leftward of the front wheel.

According to another preferred aspect, a left-right center of the front wheel is located rightward of the vehicle center line.

According to the aspect above, it is possible to further suppress the leftward rotation of the steering shaft when the body frame tilts rightward. Therefore, it is possible to further improve the straight-traveling stability of the motorcycle.

According to the present teaching, it is possible to improve the straight-traveling stability while suppressing a weight increase for a motorcycle whose center of gravity is shifted leftward off the vehicle center line and whose brake is located rightward of the front wheel or a motorcycle whose center of gravity is shifted rightward off the vehicle center line and whose brake is located leftward of the front wheel.

### BRIEF DESCRIPTION OF THE DRAWINGS

FIG. 1 is a front view of a motorcycle according to an embodiment.
FIG. 2 is a plan view of the motorcycle.
FIG. 3 is a left side view of the motorcycle.
FIG. 4 is a left side view of a body frame, etc., of the motorcycle.
FIG. 5 is a right side view of a front wheel.
FIG. 6 is a cross-sectional view taken along line VI-VI of FIG. 5.
FIG. 7 is a perspective view of a handle.
FIG. 8 is a cross-sectional view of a handle left end portion.
FIG. 9 is a cross-sectional view of a handle right end portion.
FIG. 10 is a conceptual diagram illustrating the behavior of the front wheel and the steering shaft when the body frame tilts leftward.
FIG. 11 corresponds to FIG. 6 according to a variation of a first embodiment.
FIG. 12 corresponds to FIG. 6 according to a second embodiment.
FIG. 13 corresponds to FIG. 6 according to a variation of the second embodiment.

### DETAILED DESCRIPTION OF THE PREFERRED EMBODIMENTS

### (First embodiment)

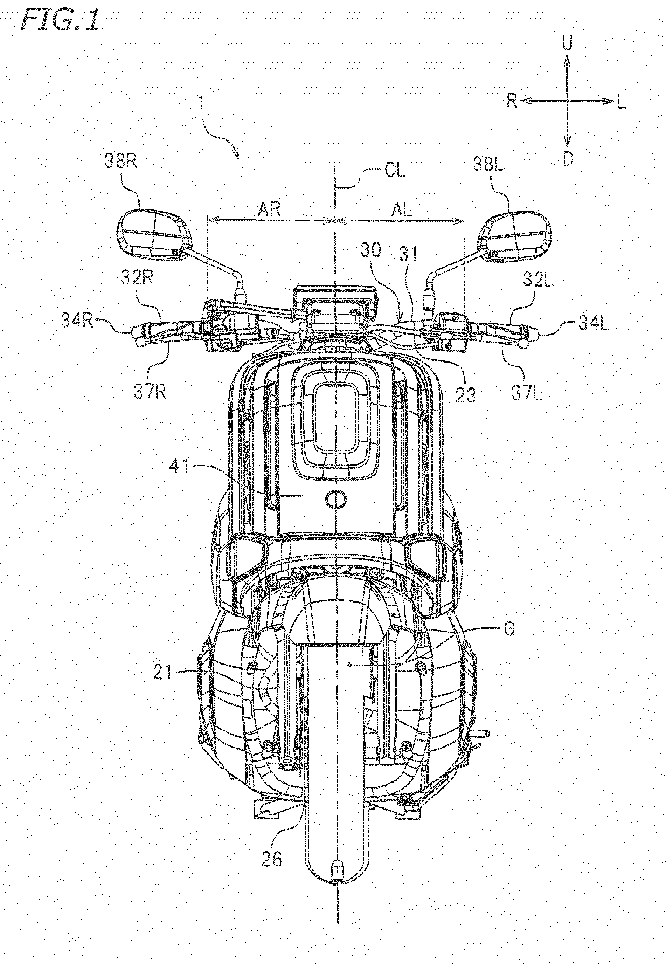

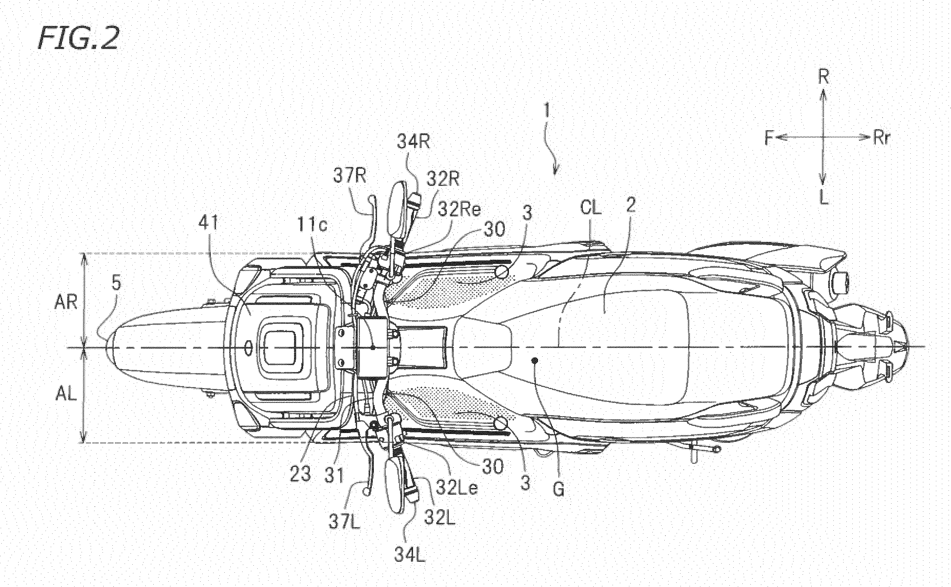

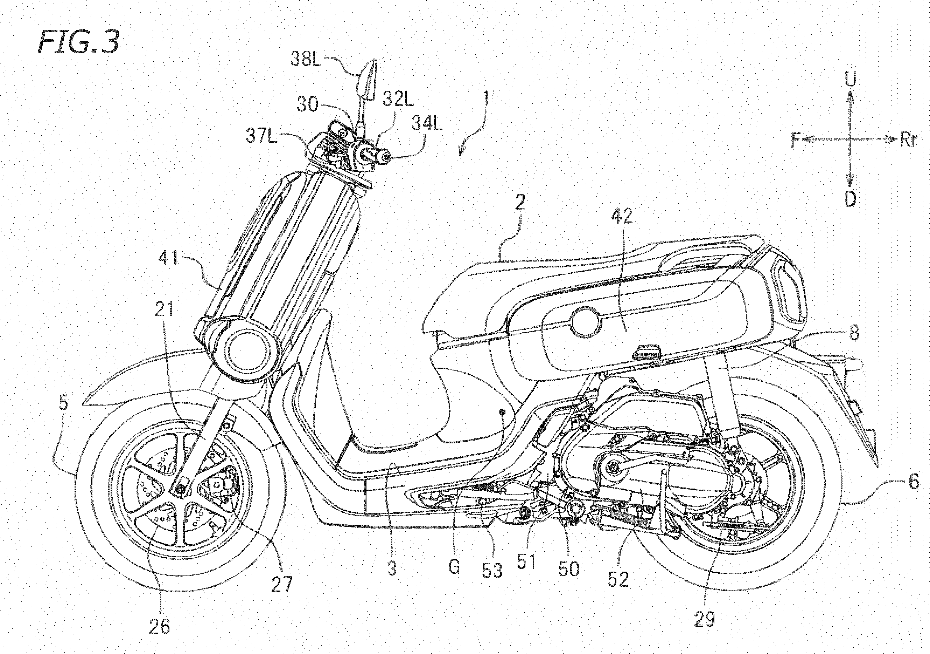

A preferred embodiment will now be described with reference to the drawings. FIG. 1 is a front view of a motorcycle 1 according to one preferred embodiment. FIG. 2 is a plan view of the motorcycle 1, and FIG. 3 is a left side view of the motorcycle 1.

The terms front, rear, left, right, up and down, as used in the description below regarding the configuration of the motorcycle 1, refer to these directions as seen from a virtual rider seated on a seat 2 when the motorcycle 1 is standing upright on a horizontal surface with no load thereon. The term no load means that the motorcycle 1 has no fuel and has no luggage mounted thereon, with no rider thereon. The designations F, Rr, L, R, U and D, as used in the figures, refer to front, rear, left, right, up and down, respectively.

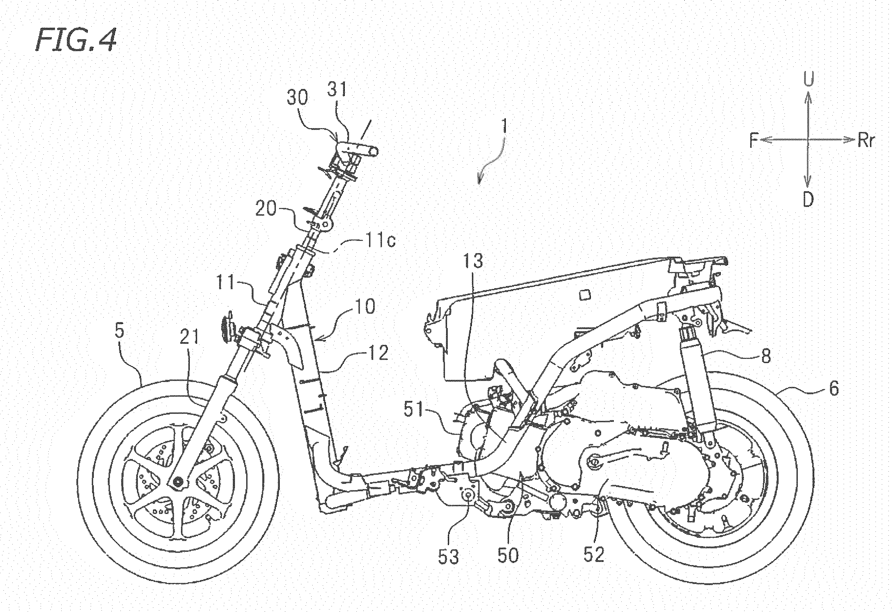

The motorcycle 1 of the present embodiment is a scooter-type motorcycle. Note however that the motorcycle of the present teaching is not limited to a scooter-type motorcycle. As shown in FIG. 4, the motorcycle 1 includes a body frame 10. The body frame 10 includes a head pipe 11, a down frame 12 extending downward from the head pipe 11, and a seat frame 13 extending rearward and upward from the down frame 12.

A steering shaft 20 is rotatably inserted into the head pipe 11. A handle 30 is supported on an upper portion of the steering shaft 20. A front fork 21 is secured on a lower portion of the steering shaft 20. A front wheel 5 is supported on a lower end portion of the front fork 21. The front wheel 5 is supported on the steering shaft 20 via the front fork 21. The handle 30 is located above the head pipe 11, and the front wheel 5 is located below the head pipe 11. The handle 30 is located above the front wheel 5.

A power unit 50 is pivotally supported on the seat frame 13. A pivot shaft 53 is provided on the seat frame 13. The power unit 50 is pivotally supported on the pivot shaft 53. The power unit 50 includes an internal combustion engine 51, a V-belt continuously variable transmission (not shown), and a transmission case 52 covering the V-belt continuously variable transmission. Note that the power source of the power unit 50 is not limited to the internal combustion engine 51, and it may be an electric motor, for example. The power unit 50 may include a transmission having a plurality of gears, instead of a V-belt continuously variable transmission. The rear wheel 6 is supported on the rear end portion of the power unit 50. The rear cushion unit 8 is connected to the seat frame 13 and the rear wheel 6.

As shown in FIG. 3, the seat 2 is located rearward of the head pipe 11 (not shown in FIG. 3; see FIG. 4). A front cover 41 is located forward of the head pipe 11. A footrest 3 is provided forward of and below the seat 2. A side cover 42 is located below and on the side of the seat 2.

In FIGS. 1 to 3, the reference sign G denotes the center of gravity of the vehicle. The term "center of gravity of the vehicle" as used herein refers to the center of gravity of the motorcycle 1 when the motorcycle 1 is standing upright on a horizontal surface with no load thereon. In FIG. 2, the reference sign CL denotes the vehicle center line. The vehicle center line CL refers to a line extending in the vehicle front-rear direction that includes a center line 11c of the head pipe 11 (see FIG. 4) as the vehicle is seen from above. As shown in FIG. 2, the center of gravity G of the motorcycle 1 of the present embodiment is located leftward of the vehicle center line CL as the vehicle is seen from above. The part of the motorcycle 1 that is located leftward of the vehicle center line CL is heavier than the part of the motorcycle 1 that is located rightward of the vehicle center line CL.

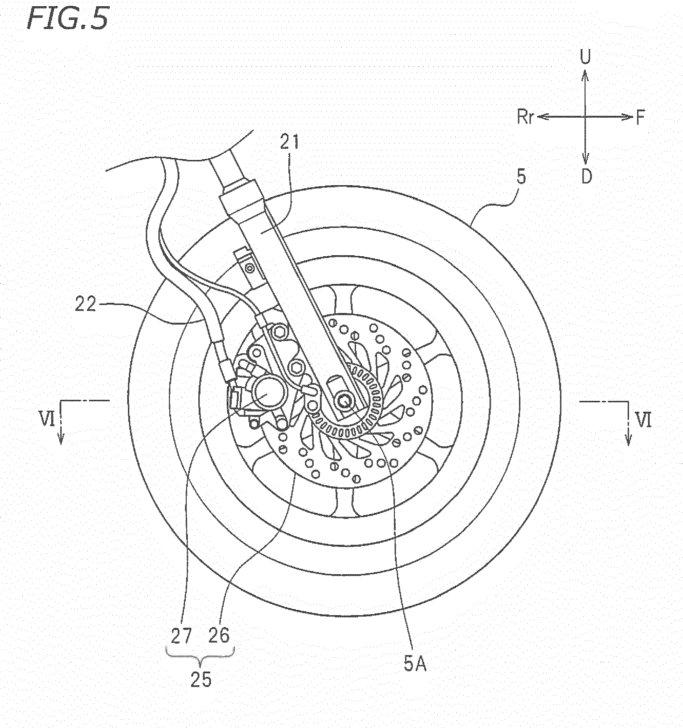

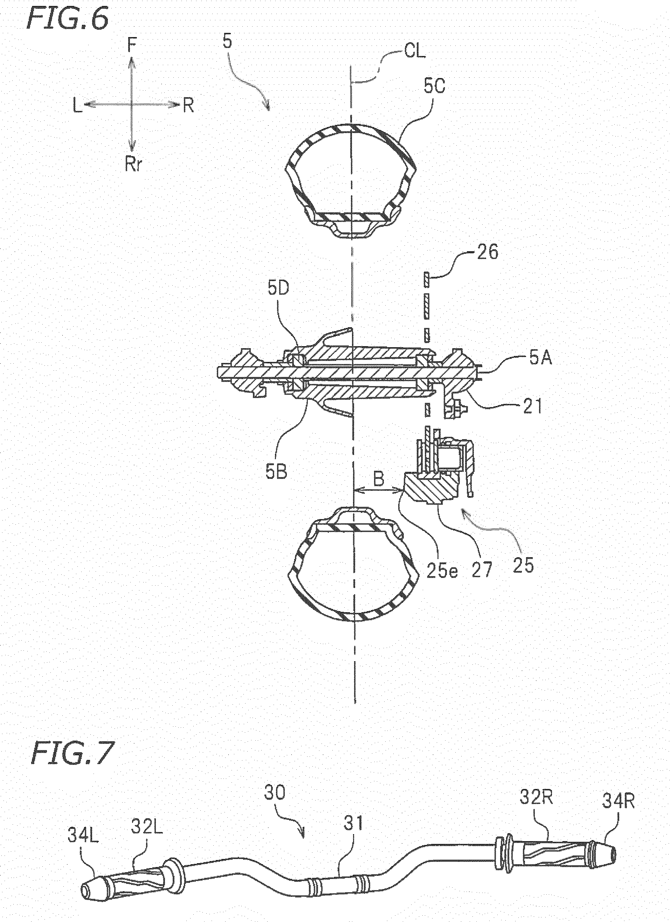

FIG. 5 is a right side view of the front wheel 5. FIG. 6 is a cross-sectional view taken along line VI-VI of FIG. 5. As shown in FIG. 6, the front wheel 5 includes a front axle 5A, a wheel 5B, and a tire 5C attached to the wheel 5B. The front axle 5A is secured on the front fork 21. The front axle 5A supports the wheel 5B via a bearing 5D. The wheel 5B is rotatably supported on the front axle 5A.

As shown in FIG. 5, a brake 25 is attached to the front wheel 5. While there is no limitation on the type of the brake 25, the brake 25 of the present embodiment includes a brake disc 26 and a brake caliper 27. The brake disc 26 is secured on the front wheel 5 so that the brake disc 26 rotates together with the front wheel 5. As shown in FIG. 6, the brake disc 26 is secured on the wheel 5B. The brake caliper 27 is supported on the front fork 21. As shown in FIG. 5, a brake hose 22 is connected to the brake caliper 27.

In the present embodiment, the brake 25 is located rightward of the front wheel 5. Note that being rightward or leftward of the front wheel 5 as used herein means being rightward or leftward of the center of the front wheel 5 in the vehicle width direction. The brake disc 26 and the brake caliper 27 are located rightward of the front wheel 5. The brake is not located leftward of the front wheel 5. The load applied to the right side of the front wheel 5 is greater than the load applied to the left side of the front wheel 5.

FIG. 7 is a perspective view of the handle 30. The handle 30 includes a handle bar 31 secured on the steering shaft 20 (see FIG. 4), a left grip 32L provided on the left end portion of the handle bar 31, and a right grip 32R provided on the right end portion of the handle bar 31. The handle bar 31 extends in the vehicle width direction. There is no particular limitation on the shape of the handle bar 31. The handle bar 31 may be curved or may be bent.

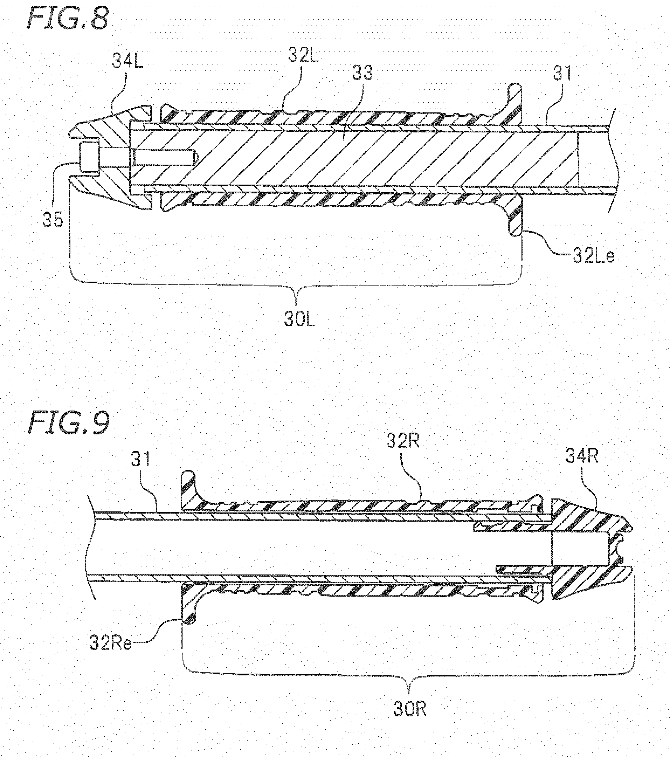

FIG. 8 is a cross-sectional view of the left end portion of the handle 30. In the present embodiment, the handle bar 31 is formed in a tubular shape. The left end portion of the handle bar 31 is inserted into the left grip 32L. A metal-made plug 33 is fitted into the left end portion of the handle bar 31. A left grip end 34L is located leftward of the left grip 32L. At least a portion of the left grip end 34L is located leftward of the handle bar 31. The left grip end 34L is secured on the plug 33 via a bolt 35. Note however that there is no limitation on how the left grip end 34L is secured on the handle bar 31.

FIG. 9 is a cross-sectional view of the right end portion of the handle 30. The plug 33 is absent inside the right end portion of the handle bar 31. A space is formed inside the right end portion of the handle bar 31. The right end portion of the handle bar 31 is inserted into the right grip 32R. A right grip end 34R is located rightward of the right grip 32R. At least a portion of the right grip end 34R is located rightward of the handle bar 31. Another portion of the right grip end 34R is fitted into the handle bar 31. The right grip end 34R is not secured via a bolt. Note however that there is no particular limitation on how the right grip end 34R is secured on the handle bar 31.

In the present embodiment, the handle bar 31 and the plug 33 are made of a metal. The plug 33 is made of iron, for example. The left grip 32L and the right grip 32R are made of a resin. The weight of the left grip end 34L is greater than that of the right grip end 34R. The left grip end 34L is made of a metal, and the right grip end 34R is made of a resin. The left grip end 34L is made of iron, for example. Note however that this is merely an example. There is no particular limitation on the materials of the handle bar 31, the plug 33, the left grip 32L, the right grip 32R, the left grip end 34L and the right grip end 34R.

In the present embodiment, the weight of a portion 30L (hereinafter referred to as the handle left end portion) of the handle 30 that is located leftward of a right end 32Le of the left grip 32L is greater than the weight of a portion 30R (hereinafter referred to as the handle right end portion) of the handle 30 that is located rightward of a left end 32Re of the right grip 32R. Note that in the present embodiment, the weight of the handle left end portion 30L is the sum of the weight of the left grip end 34L, the weight of the bolt 35, the weight of the left grip 32L, the weight of a portion of the handle bar 31 that is located leftward of the right end 32Le of the left grip 32L, and the weight of a portion of the plug 33 that is located leftward of the right end 32Le of the left grip 32L. The weight of the handle right end portion 30R is the sum of the weight of the right grip end 34R, the weight of the right grip 32R, and the weight of a portion of the handle bar 31 that is located rightward of the left end 32Re of the right grip 32R. While there is no particular limitation on the ratio between the weight of the handle left end portion 30L and the weight of the handle right end portion 30R, the weight of the handle left end portion 30L is greater than or equal to twice the weight of the handle right end portion 30R in the present embodiment. The weight of the handle left end portion 30L may be greater than or equal to three times or five times the weight of the handle right end portion 30R.

As shown in FIG. 2, AL denotes the distance in the vehicle width direction between the right end 32Le of the left grip 32L and the vehicle center line CL. AR denotes the distance in the vehicle width direction between the left end 32Re of the right grip 32R and the vehicle center line CL. As shown in FIG. 6, B denotes the distance in the vehicle width direction between a left end 25e of the brake 25 and the vehicle center line CL. AL and AR are both greater than B. That is, AL>B and AR>B. Note that AL=AR in the present embodiment. Note however that AL and AR may be different from each other.

As shown in FIG. 2, a left brake lever 37L is located forward of the left grip 32L. A right brake lever 37R is located forward of the right grip 32R. The left brake lever 37L and the right brake lever 37R are supported on the handle bar 31. A brake wire 23 is connected to the left brake lever 37L. The brake wire 23 is connected to a brake 29 of the rear wheel 6 (see FIG. 3). The brake hose 22 (see FIG. 5), which is connected to the brake 25 of the front wheel 5, is connected to the right brake lever 37R. When the rider pulls the right brake lever 37R, the brake 25 of the front wheel 5 is actuated, thereby braking the front wheel 5. When the rider pulls the left brake lever 37L, the brake 29 of the rear wheel 6 is actuated, thereby braking the rear wheel 6.

As shown in FIG. 1, a left side mirror 38L and a right side mirror 38R are attached to the handle 30. The left side mirror 38L is attached to a portion of the handle bar 31 that is between the left grip 32L and the vehicle center line CL. The right side mirror 38R is attached to a portion of the handle bar 31 that is between the right grip 32R and the vehicle center line CL.

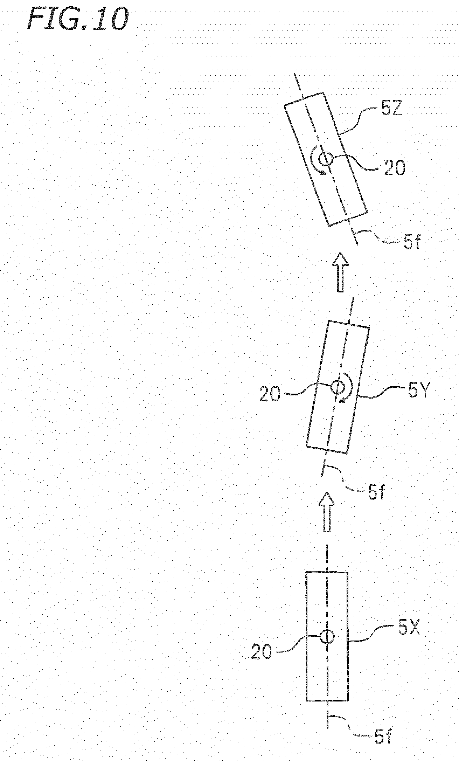

The configuration of the motorcycle 1 is as described above. As opposed to an automobile, it is a nature of the motorcycle 1 that the body frame 10 tilts with respect to the vertical line when turning. When the body frame 10 tilts while running straight, if the rider is not holding the handle 30, the steering shaft 20 tends to rotate. Next, the behavior of the motorcycle 1 when the body frame 10 tilts will be described with reference to FIG. 10. Note that those parts of the motorcycle 1 that rotate about the center line 11c of the head pipe 11 will be referred to as the "steering system" in the description below. The handle 30, the steering shaft 20, the front wheel 5 and the brake 25 are parts of the steering system.

When the body frame 10, standing upright on a horizontal surface, tilts leftward, while the motorcycle 1 is running straight, the state of the front wheel 5 transitions as indicated by reference signs 5X to 5Y to 5Z, if the handle 30 is not being controlled. That is, when the body frame 10 tilts leftward, the steering shaft 20 instantaneously rotates rightward, and the front wheel 5 transitions from the state 5X to the state 5Y. Then, the steering shaft 20 rotates leftward, and the front wheel 5 transitions from the state 5Y to the state 5Z. As a result, the motorcycle 1 turns left.

In the motorcycle 1 of the present embodiment, the center of gravity G of the vehicle is located leftward of the vehicle center line CL as the vehicle is seen from above. Therefore, as compared with a motorcycle of which the center of gravity G of the vehicle is located on the vehicle center line CL, the body frame 10 is likely to tilt leftward. In the motorcycle 1 of the present embodiment, the brake 25 is located rightward of the front wheel 5. Therefore, if the weight of the handle left end portion 30L is equal to the weight of the handle right end portion 30R, the right half of the steering system is heavier than the left half thereof, and the steering shaft 20 is likely to rotate rightward. As a result, when the body frame 10 tilts leftward, the behavior of the steering shaft 20 instantaneously rotating rightward is likely to occur. Therefore, the behavior of the steering shaft 20 rotating leftward after instantaneously rotating rightward is likely to be induced, and the state of the front wheel 5 is likely to transition from 5X to 5Y to 5Z.

However, in the motorcycle 1 of the present embodiment, the weight of the handle left end portion 30L is greater than the weight of the handle right end portion 30R. The left-right weight balance of the steering system is corrected. This suppresses the steering shaft 20 instantaneously rotating rightward when the body frame 10 tilts leftward. As a result, this also suppresses the steering shaft 20 rotating leftward thereafter. That is, according to the present embodiment, it is possible to suppress the transition of the front wheel 5 from the state 5X to 5Y and, as a result, it is possible to suppress the front wheel 5 transitioning to the state 5Z. Thus, it is possible to improve the straight-traveling stability of the motorcycle 1.

If the steering system includes a part whose weight is m, the rotation moment M to be caused by this part on the steering shaft 20 is M=mxL. Herein, L is the distance between this part and the center line 11c of the head pipe 11. Note that L is equal to the distance between this part and the vehicle center line CL. The larger L is, the greater the rotation moment M. In the present embodiment, the distance AL in the vehicle width direction between the right end 32Le of the left grip 32L and the vehicle center line CL is greater than the distance B in the vehicle width direction between the left end 25e of the brake 25 and the vehicle center line CL. Therefore, even if the weight difference between the handle left end portion 30L and the handle right end portion 30R is relatively small, the weight difference gives a relatively large rotation moment on the steering shaft 20. Without much increasing the weight of the handle left end portion 30L, it is possible to effectively give a leftward rotation moment on the steering shaft 20. Therefore, the rightward rotation moment caused by the brake 25 on the steering shaft 20 can be canceled out by the weight difference between the handle left end portion 30L and the handle right end portion 30R. Therefore, according to the present embodiment, it is possible to correct the balance between rotation moments on the steering shaft 20 while suppressing an increase in the weight of the handle 30.

When the center of gravity G of the vehicle is located leftward of the vehicle center line CL, one may consider bringing the center of gravity G closer to the vehicle center line CL by adding a heavy object on the right side of the body frame 10, as a method for improving the straight-traveling stability. This, however, leads to an increase in the weight of the motorcycle 1. The present embodiment will not lead to such a weight increase. Therefore, with the motorcycle 1 in which the center of gravity G of the vehicle is located leftward of the vehicle center line CL and in which the brake 25 is located rightward of the front wheel 5, it is possible to improve the straight-traveling stability while suppressing a weight increase.

The left grip end 34L and the right grip end 34R are members of the handle 30 that are farthest away from the steering shaft 20. Even if there is a small weight difference between the left grip end 34L and the right grip end 34R, the rotation moment to be applied on the steering shaft 20 by the weight difference will be large. In the present embodiment, the left grip end 34L is made of a metal and the right grip end 34R is made of a resin. The weight of the left grip end 34L is greater than the weight of the right grip end 34R. Although the left grip end 34L is heavier than the right grip end 34R, it is possible to keep the left grip end 34L relatively light while suppressing the rightward rotation of the steering shaft 20 when the body frame 10 tilts leftward. Thus, it is possible to improve the straight-traveling stability while suppressing an increase in the weight of the motorcycle 1. Moreover, the weight of the left grip end 34L can be made greater than the weight of the right grip end 34R with a simple configuration.

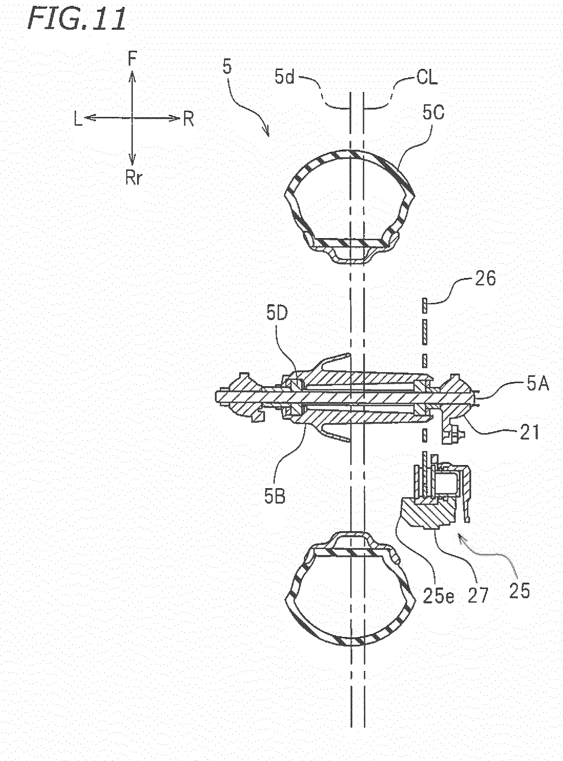

As shown in FIG. 6, in the present embodiment, the left-right center of the front wheel 5 is located on the vehicle center line CL. However, the position of the front wheel 5 and that of the brake 25 may be shifted leftward. As shown in FIG. 11, a left-right center 5d of the front wheel 5 may be located leftward of the vehicle center line CL. Then, it is possible to further suppress the rightward rotation of the steering shaft 20 when the body frame 10 tilts leftward. Therefore, it is possible to further improve the straight-traveling stability of the motorcycle 1 while suppressing a weight increase.

### (Second embodiment)

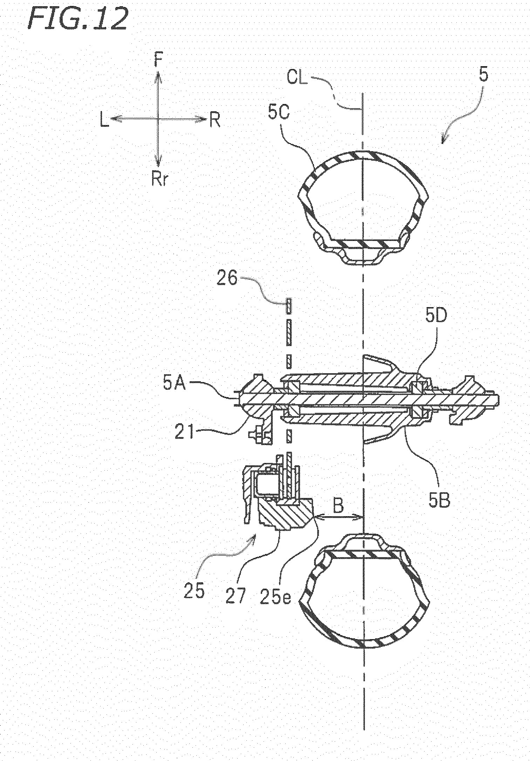

In the first embodiment, as the vehicle is seen from above, the center of gravity G of the vehicle is located leftward of the vehicle center line CL and the brake 25 is located rightward of the front wheel 5. However, as the vehicle is seen from above, the center of gravity G of the vehicle may be located rightward of the vehicle center line CL and the brake 25 may be located leftward of the front wheel 5 (see FIG. 12). The distance AR in the vehicle width direction between the left end 32Re of the right grip 32R and the vehicle center line CL is greater than the distance B in the vehicle width direction between the right end 25e of the brake 25 and the vehicle center line CL. In such a case, the weight of the handle right end portion 30R can be made greater than the weight of the handle left end portion 30L. Then, it is possible to suppress the steering shaft 20 being likely to rotate leftward. Thus, when the body frame 10 tilts rightward, it is possible to suppress the steering shaft 20 instantaneously rotating leftward and it is possible to suppress the steering shaft 20 rotating rightward thereafter. Therefore, in a motorcycle of which the center of gravity G of the vehicle is located rightward of the vehicle center line CL and the brake 25 located leftward of the front wheel 5, it is possible to improve the straight-traveling stability while suppressing a weight increase.

In the present embodiment, the weight of the right grip end 34R may be made greater than the weight of the left grip end 34L. For example, the right grip end 34R may be made of a metal and the left grip end 34L may be made of a resin. The plug 33 may be provided inside the right end portion of the handle bar 31 while the plug 33 is absent inside the left end portion of the handle bar 31. The present embodiment can also achieve advantageous effects similar to those of the first embodiment.

There is no particular limitation on the ratio between the weight of the handle right end portion 30R and the weight of the handle left end portion 30L. For example, the weight of the handle right end portion 30R may be greater than or equal to twice, three times or five times the weight of the handle left end portion 30L.

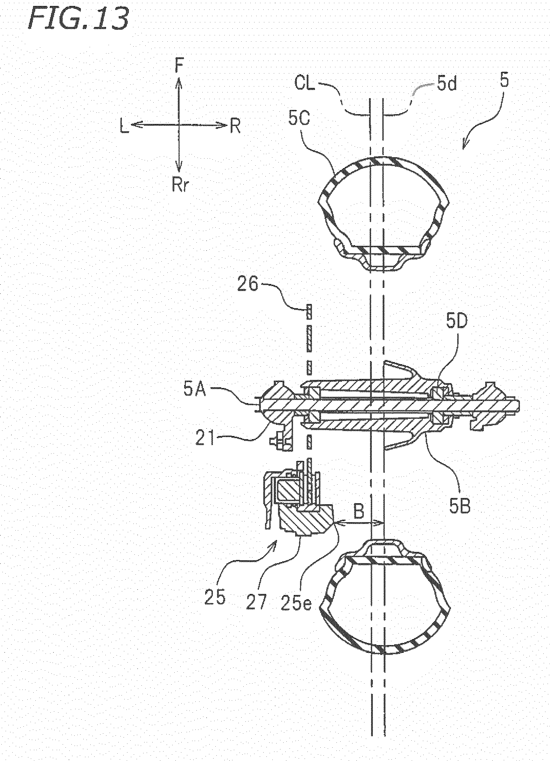

Also in the present embodiment, the left-right center of the front wheel 5 is located on the vehicle center line CL (see FIG. 12). However, the positions of the front wheel 5 and the brake 25 may be shifted rightward. As shown in FIG. 13, the left-right center 5d of the front wheel 5 may be located rightward of the vehicle center line CL. Then, it is possible to further suppress the leftward rotation of the steering shaft 20 when the body frame 10 tilts rightward. Therefore, it is possible to further improve the straight-traveling stability of the motorcycle 1 while suppressing a weight increase.

### (Alternative embodiments)

The embodiments described above are merely illustrative, and the present teaching can be carried out in various other embodiments. In the first embodiment, the plug 33 is provided inside the left end portion of the handle bar 31. In the second embodiment, the plug 33 is provided inside the right end portion of the handle bar 31. However, the plug 33 is not always required. Alternatively, the plug 33 may be provided both inside the left end portion of the handle bar 31 and inside the right end portion of the handle bar 31.

While the material of the left grip end 34L is different from the material of the right grip end 34R in the embodiments described above, the materials may be the same. Moreover, while the weight of the left grip end 34L is different from the weight of the right grip end 34R in the embodiments described above, the weights may be equal to each other.

The left grip end 34L and the left grip 32L do not always need to be separate from each other, but may be an integral piece. The right grip end 34R and the right grip 32R do not always need to be separate from each other, but may be an integral piece. The left grip end 34L and the right grip end 34R are not always needed, but may be omitted.

The brake 25 does not need to include the brake disc 26 and the brake caliper 27. Any brake known in the art may be used as the brake 25.

### REFERENCE SIGNS LIST

1: Motorcycle, 5: Front wheel, 10: Body frame, 11: Head pipe, 11c: Center line of head pipe, 20: Steering shaft, 25: Brake, 26: Brake disc, 27: Brake caliper, 30: Handle, 31: Handle bar, 32L: Left grip, 32Le: Right end of left grip, 32R: Right grip, 32Re: Left end of right grip, 34L: Left grip end, 34R: Right grip end, CL: Vehicle center line, G: Center of gravity of vehicle

## Claims

1. A motorcycle comprising:
a body frame (10) including a head pipe (11);
a steering shaft (20) rotatably inserted into the head pipe (11);
a front wheel (5) supported on the steering shaft (20);
a handle (30) supported on the steering shaft (20) and located above the front wheel (5); and
a brake (25) configured to brake the front wheel (5), wherein:
the handle (30) includes a handle bar (31) secured on the steering shaft (20), a left grip (32L) provided on a left end portion (30L) of the handle bar (31), and a right grip (32R) provided on a right end portion (30R) of the handle bar (31);
a center of gravity (G) of a vehicle is located leftward of a vehicle center line (CL), which is a line that includes a center line of the head pipe (11) and extends in a vehicle front-rear direction, as the vehicle is seen from above;
the brake (25) is located rightward of the front wheel (5);
a distance (AL) in the vehicle width direction between a right end (32Le) of the left grip (32L) and the vehicle center line (CL) is greater than a distance (B) in the vehicle width direction between a left end (25e) of the brake (25) and the vehicle center line (CL); **characterized in that**
a weight of a portion of the handle (30) that is located leftward of the right end (32Le) of the left grip (32L) is greater than a weight of a portion of the handle (30) that is located rightward of a left end (32Re) of the right grip (32R).

2. A motorcycle according to claim 1, wherein the handle (30) includes a left grip end (34L) at least a portion of which is located leftward of the left grip (32L) and leftward of the handle bar (31), and a right grip end (34R) at least a portion of which is located rightward of the right grip (32R) and rightward of the handle bar (31); and
a weight of the left grip end (34L) is greater than a weight of the right grip end (34R).

3. A motorcycle according to claim 2, wherein the left grip end (34L) is made of a metal, and the right grip end (34R) is made of a resin.

4. A motorcycle according to any one of claims 1 to 3, wherein the weight of the portion of the handle (30) that is located leftward of the right end (32Le) of the left grip (32L) is greater than or equal to twice the weight of the portion of the handle (30) that is located rightward of the left end of the right grip (32R).

5. A motorcycle according to any one of claims 1 to 4, wherein the brake (25) includes a brake disc (26) and a brake caliper (27).

6. A motorcycle according to any one of claims 1 to 5, wherein a left-right center of the front wheel (5) is located leftward of the vehicle center line (CL).

7. A motorcycle comprising:
a body frame (10) including a head pipe (11);
a steering shaft (20) rotatably inserted into the head pipe (11);
a front wheel (5) supported on the steering shaft (20);
a handle (30) supported on the steering shaft (20) and located above the front wheel (5); and
a brake (25) configured to brake the front wheel (5), wherein:
the handle (30) includes a handle bar (31) secured on the steering shaft (20), a left grip (32L) provided on a left end portion (30L) of the handle bar (31), and a right grip (32R) provided on a right end portion (30R) of the handle bar (31);
a center of gravity (G) of a vehicle is located rightward of a vehicle center line (CL), which is a line that includes a center line of the head pipe (11) and extends in a vehicle front-rear direction, as the vehicle is seen from above;
the brake (25) is located leftward of the front wheel (5);
a distance (AR) in a vehicle width direction between a left end (32Re) of the right grip (32R) and the vehicle center line (CL) is greater than a distance (B) in the vehicle width direction between a right end (25e) of the brake (25) and the vehicle center line (CL); **characterized in that**
a weight of a portion of the handle (30) that is located rightward of the left end (32Re) of the right grip (32R) is greater than a weight of a portion of the handle (30) that is located leftward of a right end (32Le) of the left grip (32L).

8. A motorcycle according to claim 7, wherein the handle (30) includes a left grip end (34L) at least a portion of which is located leftward of the left grip (32L) and leftward of the handle bar (31), and a right grip end (34R) at least a portion of which is located rightward of the right grip (32R) and rightward of the handle bar (31); and
a weight of the right grip end (34R) is greater than a weight of the left grip end (34L).

9. A motorcycle according to claim 8, wherein the right grip end (34R) is made of a metal, and the left grip end (34L) is made of a resin.

10. A motorcycle according to any one of claims 7 to 9, wherein the weight of the portion of the handle (30) that is located rightward of the left end of the right grip (32R) is greater than or equal to twice the weight of the portion of the handle (30) that is located leftward of the right end (32Le) of the left grip (32L).

11. A motorcycle according to any one of claims 7 to 10, wherein the brake (25) includes a brake disc (26) and a brake caliper (27).

12. A motorcycle according to any one of claims 7 to 11, wherein a left-right center of the front wheel (5) is located rightward of the vehicle center line (CL).

## Patentansprüche

1. Ein Motorrad, das umfasst:
einen Körper-Rahmen (10), der ein Kopf-Rohr (11) beinhaltet;
eine Lenk-Welle (20), die drehbar in das Kopf-Rohr (11) eingesetzt ist;
ein Vorder-Rad (5), das an der Lenk-Welle (20) gelagert ist;
einen Lenker (30), der an der Lenk-Welle (20) gelagert ist, und oberhalb des Vorder-Rads (5) angeordnet ist; und
eine Bremse (25), die konfiguriert ist, um das Vorder-Rad (5) zu bremsen, wobei:
der Lenker (30) eine Lenk-Stange (31), die an der Lenk-Welle (20) gesichert ist, einen linken Griff (32L), der an einem linken End-Abschnitt (30L) der Lenk-Stange (31) vorgesehen ist, und einen rechten Griff (32R), der an einem rechten End-Abschnitt (30R) der Lenk-Stange (31) vorgesehen ist, beinhaltet;
ein Schwerpunkt (G) von einem Fahrzeug ist links von einer Fahrzeug-Mittel-Linie (CL) angeordnet, die eine Linie ist, welche eine Mittel-Linie des Kopf-Rohrs (11) beinhaltet und sich in eine Fahrzeug-Vorder-Rück-Richtung erstreckt, wenn das Fahrzeug von oben betrachtet ist;
die Bremse (25) ist rechts von dem Vorder-Rad (5) angeordnet;
ein Abstand (AL) in der Fahrzeug-Breiten-Richtung zwischen dem rechten Ende (32Le) des linken Griffs (32L) und der Fahrzeug-Mittel-Linie (CL) ist größer als ein Abstand (B) in der Fahrzeug-Breiten-Richtung zwischen einem linken Ende (25e) der Bremse (25) und der Fahrzeug-Mittel-Linie (CL); **dadurch gekennzeichnet, dass** ein Gewicht von einem Abschnitt des Lenkers (30), der links von dem rechten Ende (32Le) des linken Griffs (32L) angeordnet ist, größer ist als ein Gewicht von einem Abschnitt des Lenkers (30), der rechts von einem linken Ende (32Re) des rechten Griffs (32R) angeordnet ist.

2. Ein Motorrad gemäß Anspruch 1, wobei der Lenker (30) ein linkes Griff-Ende (34L) beinhaltet, zumindest ein Abschnitt desselben ist links von dem linken Griff (32L) und links von der Lenk-Stange (31) angeordnet, und ein rechtes Griff-Ende (34R) beinhaltet, zumindest ein Abschnitt desselben ist rechts von dem rechten Griff (32R) und rechts von der Lenk-Stange (31) angeordnet; und
ein Gewicht des linken Griff-Endes (34L) ist größer als ein Gewicht des rechten Griff-Endes (34R).

3. Ein Motorrad gemäß Anspruch 2, wobei das linke Griff-Ende (34L) aus einem Metall gemacht ist und das rechte Griff-Ende (34R) ist aus einem Harz gemacht.

4. Ein Motorrad gemäß irgendeinem der Ansprüche 1 bis 3, wobei das Gewicht des Abschnitts des Lenkers (30), der links von dem rechten Ende (32Le) des linken Griffs (32L) angeordnet ist, größer ist als oder gleich zweimal dem Gewicht von dem Abschnitt des Lenkers (30), der rechts von dem linken Ende von dem rechten Griff (32R) angeordnet ist.

5. Ein Motorrad gemäß irgendeinem der Ansprüche 1 bis 4, wobei die Bremse (25) eine Brems-Scheibe (26) und eine Brems-Zange (27) beinhaltet.

6. Ein Motorrad gemäß irgendeinem der Ansprüche 1 bis 5, wobei ein Links-Rechts-Zentrum des Vorder-Rads (5) links von der Fahrzeug-Mittel-Linie (CL) angeordnet ist.

7. Ein Motorrad, das umfasst:
einen Körper-Rahmen (10), der ein Kopf-Rohr (11) beinhaltet;
eine Lenk-Welle (20), die drehbar in das Kopf-Rohr (11) eingesetzt ist;
ein Vorder-Rad (5), das an der Lenk-Welle (20) gelagert ist;
einen Lenker (30), der an der Lenk-Welle (20) gelagert ist und oberhalb des Vorder-Rads (5) angeordnet ist; und
eine Bremse (25), die konfiguriert ist, um das Vorder-Rad (5) zu bremsen, wobei:
der Lenker (30) eine Lenk-Stange (31), die an der Lenk-Welle (20) gesichert ist, einen linken Griff (32L), der an einem linken End-Abschnitt (30L) der Lenk-Stange (31) vorgesehen ist, und einen rechten Griff (32R), der an einem rechten End-Abschnitt (30R) der Lenk-Stange (31) vorgesehen ist, beinhaltet;
ein Schwerpunkt (G) eines Fahrzeugs ist rechts von einer Fahrzeug-Mittel-Linie (CL) angeordnet, die eine Linie ist, die eine Mittel-Linie des Kopf-Rohrs (11) beinhaltet und sich in eine Fahrzeug-Vorder-Rück-Richtung erstreckt, wenn das Fahrzeug von oben betrachtet ist;
die Bremse (25) ist links von dem Vorder-Rad (5) angeordnet;
ein Abstand (AR) in einer Fahrzeug-Breiten-Richtung zwischen einem linken Ende (32Re) des rechten Griffs (32R) und der Fahrzeug-Mittel-Linie (CL) ist größer als ein Abstand (B) in der Fahrzeug-Breiten-Richtung zwischen einem rechten Ende (25e) der Bremse (25) und der Fahrzeug-Mittel-Linie (CL); **dadurch gekennzeichnet, dass** ein Gewicht von einem Abschnitt des Lenkers (30), der rechts von dem linken Ende (32Re) des rechten Griffs (32R) angeordnet ist, größer ist als ein Gewicht eines Abschnitts des Lenkers (30), der links von einem rechten Ende (32Le) von dem rechten Griff (32L) angeordnet ist.

8. Ein Motorrad gemäß Anspruch 7, wobei der Lenker (30) ein linkes Griff-Ende (34L) beinhaltet, zumindest ein Abschnitt desselben ist links von dem linken Griff (32L) und links von der Lenk-Stange (31) angeordnet, und ein rechtes Griff-Ende (34R) beinhaltet, zumindest ein Abschnitt desselben ist rechts von dem rechten Griff (32R) und rechts von der Lenk-Stange (31) angeordnet; und
ein Gewicht des rechten Griff-Endes (34R) ist größer als ein Gewicht des linken Griff-Endes (34L).

9. Ein Motorrad gemäß Anspruch 8, wobei das rechte Griff-Ende (34R) aus einem Metall gemacht ist, und das linke Griff-Ende (34L) ist aus einem Harz gemacht.

10. Ein Motorrad gemäß irgendeinem der Ansprüche 7 bis 9, wobei das Gewicht des Abschnitts des Lenkers (30), der rechts von dem linken Ende von dem rechten Griff (32R) angeordnet ist, größer ist als oder gleich dem zweifachen Gewicht des Abschnitts des Lenkers (30), der links von dem rechten Ende (32Le) des linken Griffs (32L) angeordnet ist.

11. Ein Motorrad gemäß irgendeinem der Ansprüche 7 bis 10, wobei die Bremse (25) eine Brems-Scheibe (26) und eine Brems-Zange (27) beinhaltet.

12. Ein Motorrad gemäß irgendeinem der Ansprüche 7 bis 11, wobei ein Links-Rechts-Zentrum des Vorder-Rads (5) rechts von der Fahrzeug-Mittel-Linie (CL) angeordnet ist.

## Revendications

1. Motocyclette comportant :
un châssis (10) comprenant un tube frontal (11) ;
un arbre de direction (20) inséré de manière rotative dans le tube frontal (11) ;
une roue avant (5) supportée par l'arbre de direction (20) ;
un guidon (30) supporté par l'arbre de direction (20) et situé au-dessus de la roue avant (5) ; et
un frein (25) configuré pour freiner la roue avant (5), où :
le guidon (30) comprend une barre de guidon (31) fixée sur l'arbre de direction (20), une poignée gauche (32L) disposée sur une partie d'extrémité gauche (30L) de la barre de guidon (31) et une poignée droite (32R) disposée sur une partie d'extrémité droite (30R) de la barre de guidon (31) ;
un centre de gravité (G) d'un véhicule est situé sur la gauche d'une ligne centrale de véhicule (CL), qui est une ligne comprenant une ligne centrale du tube frontal (11) et s'étend dans une direction avant/arrière du véhicule, dans une vue d'en haut du véhicule ;
le frein (25) est situé sur la droite de la roue avant (5) ;
une distance (AL) dans la direction de la largeur du véhicule entre une extrémité droite (32Le) de la poignée gauche (32L) et la ligne centrale de véhicule (CL) est supérieure à une distance (B) dans la direction de la largeur du véhicule entre une extrémité gauche (25e) du frein (25) et la ligne centrale de véhicule (CL) ;
**caractérisée en ce que**
un poids d'une partie du guidon (30) qui est située sur la gauche de l'extrémité droite (32Le) de la poignée gauche (32L) est supérieur à un poids d'une partie du guidon (30) qui est située sur la droite d'une extrémité gauche (32Re) de la poignée droite (32R).

2. Motocyclette selon la revendication 1, où le guidon (30) comprend une extrémité de poignée gauche (34L) dont au moins une partie est située sur la gauche de la poignée gauche (32L) et sur la gauche de la barre de guidon (31), et une extrémité de poignée droite (34R) dont au moins une partie est située sur la droite de la poignée droite (32R) et sur la droite de la barre de guidon (31) ; et
un poids de l'extrémité de poignée gauche (34L) est supérieur à un poids de l'extrémité de poignée droite (34R).

3. Motocyclette selon la revendication 2, où l'extrémité de poignée gauche (34L) est en métal, et l'extrémité de poignée droite (34R) est en résine.

4. Motocyclette selon l'une quelconque des revendications 1 à 3, où le poids de la partie du guidon (30) qui est située sur la gauche de l'extrémité droite (32Le) de la poignée gauche (32L) est supérieur ou égal au double du poids de la partie du guidon (30) qui se situe sur la droite de l'extrémité gauche de la poignée droite (32R).

5. Motocyclette selon l'une quelconque des revendications 1 à 4, où le frein (25) comprend un disque de frein (26) et un étrier de frein (27).

6. Motocyclette selon l'une quelconque des revendications 1 à 5, où un centre gauche/droite de la roue avant (5) est situé sur la gauche de la ligne centrale de véhicule (CL).

7. Motocyclette comportant :
un châssis (10) comprenant un tube frontal (11) ;
un arbre de direction (20) inséré de manière rotative dans le tube frontal (11) ;
une roue avant (5) supportée par l'arbre de direction (20) ;
un guidon (30) supporté par l'arbre de direction (20) et situé au-dessus de la roue avant (5) ; et
un frein (25) configuré pour freiner la roue avant (5), où :
le guidon (30) comprend une barre de guidon (31) fixée sur l'arbre de direction (20), une poignée gauche (32L) disposée sur une partie d'extrémité gauche (30L) de la barre de guidon (31) et une poignée droite (32R) disposée sur une partie d'extrémité droite (30R) de la barre de guidon (31) ;
un centre de gravité (G) d'un véhicule est situé sur la droite d'une ligne centrale de véhicule (CL), qui est une ligne comprenant une ligne centrale du tube frontal (11) et s'étend dans une direction avant/arrière du véhicule, dans une vue d'en haut du véhicule ;
le frein (25) est situé sur la gauche de la roue avant (5) ;
une distance (AR) dans la direction de la largeur du véhicule entre une extrémité gauche (32Re) de la poignée droite (32R) et la ligne centrale de véhicule (CL) est supérieure à une distance (B) dans la direction de la largeur du véhicule entre une extrémité droite (25e) du frein (25) et la ligne centrale de véhicule (CL) ;
**caractérisée en ce que**
un poids d'une partie du guidon (30) qui est située sur la droite de l'extrémité gauche (32Re) de la poignée droite (32R) est supérieur à un poids d'une partie du guidon (30) qui est située sur la gauche d'une extrémité droite (32Le) de la poignée gauche (32L).

8. Motocyclette selon la revendication 7, où le guidon (30) comprend une extrémité de poignée gauche (34L) dont au moins une partie est située sur la gauche de la poignée gauche (32L) et sur la gauche de la barre de guidon (31), et une extrémité de poignée droite (34R) dont au moins une partie est située sur la droite de la poignée droite (32R) et sur la droite de la barre de guidon (31) ; et
un poids de l'extrémité de poignée droite (34R) est supérieur à un poids de l'extrémité de poignée gauche (34L).

9. Motocyclette selon la revendication 8, où l'extrémité de poignée droite (34R) est en métal, et l'extrémité de poignée gauche (34L) est en résine.

10. Motocyclette selon l'une quelconque des revendications 7 à 9, où le poids de la partie du guidon (30) qui est située sur la droite de l'extrémité gauche de la poignée droite (32R) est supérieur ou égal au double du poids de la partie du guidon (30) qui se situe sur la gauche de l'extrémité droite (32Le) de la poignée gauche (32L).

11. Motocyclette selon l'une quelconque des revendications 7 à 10, où le frein (25) comprend un disque de frein (26) et un étrier de frein (27).

12. Motocyclette selon l'une quelconque des revendications 7 à 11, où un centre gauche/droite de la roue avant (5) est situé sur la droite de la ligne centrale de véhicule (CL).
